**Europäisches Patentamt**

**European Patent Office**

**Office européen des brevets**

(19)

(11) Veröffentlichungsnummer: **0 056 078**
A2

(12) # EUROPÄISCHE PATENTANMELDUNG

(21) Anmeldenummer: **81107985.4**

(22) Anmeldetag: **06.10.81**

(51) Int. Cl.³: **G 06 F 13/00**

(30) Priorität: **22.12.80 DE 3048417**

(43) Veröffentlichungstag der Anmeldung: **21.07.82**
**Patentblatt 82/29**

(84) Benannte Vertragsstaaten: **AT BE CH FR GB IT LI NL SE**

(71) Anmelder: **COMPUTER GESELLSCHAFT KONSTANZ
MBH, Max-Strohmeyer-Strasse 116, D-7750 Konstanz
(DE)**

(72) Erfinder: **Voigt, Heinz, Paul-Gerhardt-Weg 9,
D-7750 Konstanz (DE)**
Erfinder: **Görges, Steffen, Ringstrasse 123c,
D-7750 Konstanz (DE)**
Erfinder: **Wolf, Werner, Dipl.-Ing.,
Schwaketenstrasse 94, D-7750 Konstanz (DE)**

(74) Vertreter: **Mehl, Ernst, Dipl.-Ing. et al, Postfach 22 01 76,
D-8000 München 22 (DE)**

(54) **Datenverarbeitungsanlage.**

(57) Zur Steuerung des Speicherverkehrs zwischen Arbeitsspeicher (ASP) und einer Ein-/Ausgabe-Steuerung (IOC) ist ein allen Funktionseinheiten der Ein-/Ausgabe-Steuerung gemeinsames Zubringerwerk (ZUW) eingeschaltet, das einen im Vergleich zum Arbeitsspeicher schnellen Pufferspeicher (ZUWP) zur Speicherung der Daten und der Arbeitsspeicheradressen und einen Adreßrechner zur Umsetzung der in einer Doppelwortstruktur einschließlich Doppelwort-Adresse vom Arbeitsspeicher bereitgestellten Daten in eine Bytestruktur mit Byteadresse aufweist. Dem in einzelne, jeweils einer Funktionseinheit zugeordnete Stationen eingeteilten Pufferspeicher ist ein Byte-Kreisshifter (BKS) zur links- bzw. rechtsbündigen Ausrichtung der Byteketten zugeordnet.

EP 0 056 078 A2

0056078

Computer Gesellschaft
Konstanz mbH
Max-Stromeyer-Str. 116
7750  Konstanz

Unser Zeichen
VPA  80 P 8 0 6 0 E

### Datenverarbeitungsanlage

Die Erfindung bezieht sich auf eine Datenverarbeitungsanlage gemäß den Merkmalen des Oberbegriffs des Hauptanspruchs.

In bekannten Datenverarbeitungsanlagen findet der Zugriff einzelner Funktionseinheiten zum Arbeitsspeicher
im allgemeinen in der Weise statt, daß jede Funktionseinheit ihre eigene Adreßrechnung durchführt und diese
Adresse dann an die Speicherschnittstelle weitergibt.
Die mehrfach vorhandenen Adreßrechner-Einrichtungen in
den einzelnen Funktionseinheiten erfordern deshalb
einen entsprechenden Mehraufwand. Andererseits ergeben
sich beim Speicherverkehr insofern Probleme, als in modernen Speichern vorzugsweise acht Byte zu einem Doppelwort zusammengefaßt werden, während aus der Sicht der
einzelnen Funktionseinheiten ein Zugriff auf jedes einzelne Byte verlangt wird.

Der vorliegenden Erfindung liegt nun die Aufgabe zugrunde, eine Datenverarbeitungsanlage der eingangs näher
bezeichneten Art in der Weise auszubilden, daß der für
den Datenverkehr zwischen den einzelnen Funktionseinheiten einerseits und Arbeitsspeicher andererseits erforderliche Hardware-Aufwand verringert wird.

Diese Aufgabe wird erfindungsgemäß mit den im Kennzeichen des Hauptanspruchs angegebenen Merkmalen gelöst.
Ein wesentlicher Vorteil des erfindungsgemäß vorgesehenen Zubringerwerks besteht dabei darin, daß die für den
Verkehr mit dem Arbeitsspeicher erforderlichen Einrich-

Sta 1 Stl /18.12.1980

0056078

tungen lediglich in einem einzigen Exemplar an zentraler Stelle realisiert sind und nicht in jeder Funktionseinheit, wie z.B. dem Ein/Ausgabe-Prozessor, dem Kanalwerk usw. gesondert und damit mehrfach vorhanden sein müssen.

Ein Ausführungsbeispiel der Erfindung wird im folgenden anhand der Zeichnung näher erläutert. Es zeigen:

FIG 1    ein Blockschaltbild einer Datenverarbeitungsanlage gemäß der Erfindung

FIG 2    den prinzipiellen Aufbau eines Zubringerwerks in einer Datenverarbeitungsanlage gemäß FIG 1

FIG 3    ein detalliertes Schaltbild eines Zubringerwerks gemäß FIG 2.

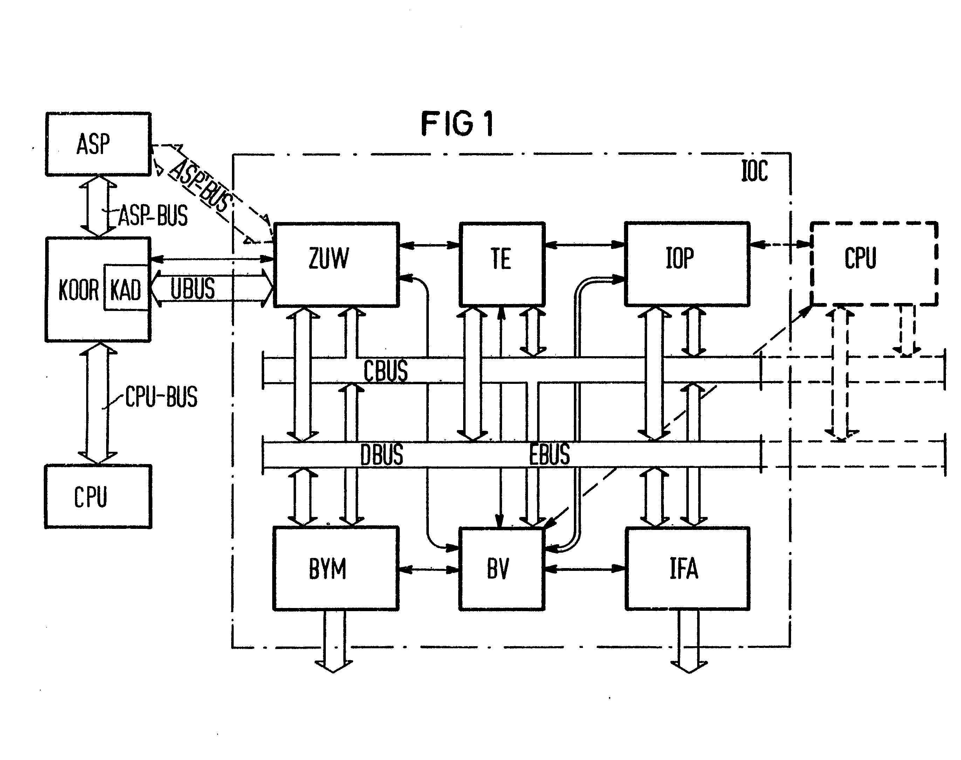

Das in FIG 1 dargestellte Blockschaltbild einer Datenverarbeitungsanlage enthält einen Arbeitsspeicher ASP, einen Zentralprozessor CPU, eine in einem strichpunktierten Block zusammengefaßte Ein/Ausgabe-Steuerung IOC, einen Arbeitsspeicher-Koordinator KOOR mit Koordinatoradapter KAR. sowie die zwischen diesen Komponenten verlaufenden Datenwege U-BUS, CPU-BUS und ASP-BUS. Die Ein/Ausgabesteuerung IOC besteht ihrerseits wieder aus mehreren Funktionseinheiten, und zwar aus einem Ein/Ausgabe-Prozessor IOP, einem Byte-Multiplexkanalwerk BYM, einer Anschlußsteuerung IFA für Peripheriegeräte, einer Testeinrichtung TE und schließlich einem Zubringerwerk ZUW, das den gesamten Arbeitsspeicherverkehr mit der Ein/Ausgabe-Steuerung IOC abwickelt. Die einzelnen Funktionseinheiten sind untereinander durch ein Bussystem verbunden, und zwar durch einen 36 Bit breiten Datenbus D-BUS, einen 4 Bit breiten Fehler-Reaktionsbus E-BUS und ein 12 Bit breiten Steuerbus C-BUS.

Die Steuerung dieses Bussystems erfolgt durch einen Bus-
Verwalter BV.

Bei der in FIG 1 gestrichelt dargestellten Variante ist der Arbeitsspeicher ASP über einen Datenweg ASP'-BUS direkt mit dem Zubringerwerk ZUW verbunden und der Zentralprozessor CPU an das bestehende Bussystem der Ein/Ausgabesteuerung IOC angeschlossen, so daß der Koordinator KOOR und die Datenwege CPU-BUS, ASP-BUS und U-BUS wegfallen können.

Die Hardware-Funktionseinheiten der Ein/Ausgabe-Steuerung IOC sind so ausgelegt, daß sie weitgehend parallel und möglichst unabhängig voneinander arbeiten können. Die Steuerung und Koordination dieser Funktionseinheiten erfolgt durch Programme, die auf dem Ein/Ausgabe-Prozessor IOP ablaufen.

Der Informationsaustausch zwischen den Hardware-Funktionseinheiten geschieht über das zentrale Bussystem. Er soll hier nur soweit erläutert werden, als er zum Verständnis der nachfolgenden Funktionsbeschreibung des ZUW erforderlich ist. Eine aktive Funktionseinheit sendet zunächst das Anforderungssignal BUS-REQUEST an den Bus-Verwalter BV und stellt die auf dem Steuerbus C-BUS zu sendende Steuerinformation in ihrem Senderegister bereit. Bei entsprechender Transportrichtung wird auch die auf den Datenbus D-BUS zu sendende Information in einem D-BUS-Transciever mit Registerfunktion bereit-gestellt. Der Bus-Verwalter BV bewertet das Signal BUS-REQUEST nach Vorfang und aktueller Belegung des Bussystems und schaltet von sich aus den Steuerbussender und gegebenenfalls den Datenbus-Sender auf den entsprechenden Bus. Während die übrigen Funktionseinheiten die auf dem Steuerbus C-Bus anliegende

0056078

Steuerinformation bewerten, verriegelt die angesprochene Funktionseinheit die auf dem Datenbus D-BUS anliegende Information in ihren Transceiver-Bausteinen oder sie schaltet - bei umgekehrter Transportrichtung - die in ihren Transceivern bereitzustellende Information für eine vereinbarte Zeit auf den Datenbus D-BUS, über den sie an die Bus-Transceiver-Register übergeben werden kann. Die jeweils aktive Funktionseinheit sendet darüber hinaus noch einen 4-Bit-Code auf den Fehler-Reaktionsbus E-BUS und zeigt damit an, ob der Informationstransport erfolgreich oder fehlerhaft abgelaufen ist.

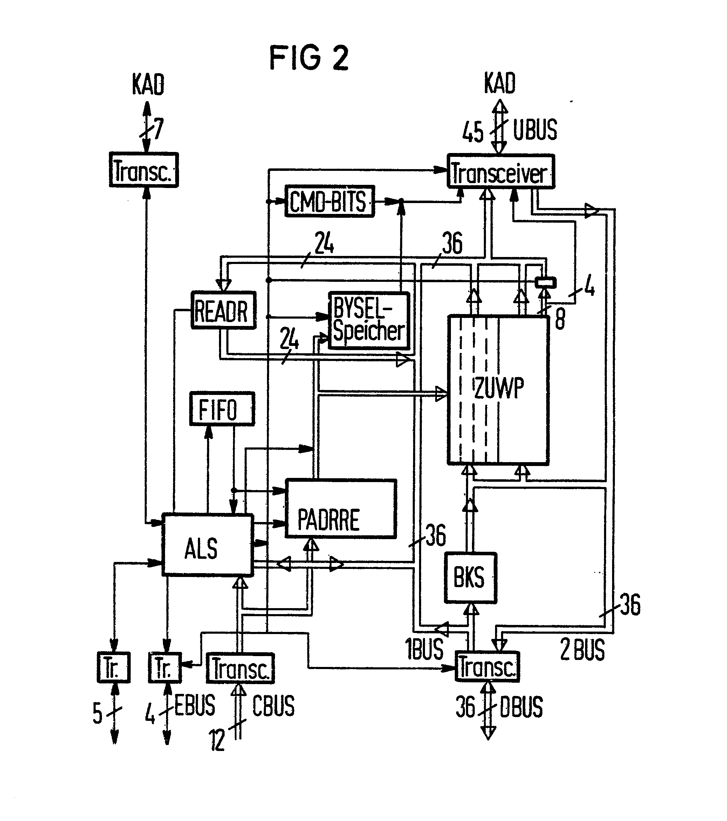

Das in FIG 2 als Blockschaltbild dargestellte Zubringerwerk, das den gesamten Arbeitsspeicherverkehr der Ein/Ausgabe-Steuerung IOC abwickelt, besteht im wesentlichen aus einem Pufferspeicher ZUWP, einem Pufferadreßrechner PADRRE, einem Real-Adreß-Rechner READR, einem Bytekreisshifter BKS, einem Zwischenpuffer FIFO, einer Ablaufsteuerung ALS sowie den internen Datenwegen 1-BUS und 2-BUS. Das Zubringerwerk ZUW steht über Transceiver auf der einen Seite über einen Datenbus D-BUS, einen Steuerbus C-BUS und einen Fehler-Reaktionsbus E-BUS mit den anderen Funktionseinheiten der Ein/Ausgabe-Steuerung IOC in Verbindung. Auf der anderen Seite wird über einen Datenweg U-BUS eine Verbindung zum Koordinator KOOR hergestellt.

Der Kern des Zubringewerks ZUW ist der bereits erwähnte Pufferspeicher ZUPW, der z.B. 256 Zellen enthält. In ihm sind z.B. 32 Stationen enthalten. Jede Station besteht aus einer Adressenzelle und vier Datenzellen. Jede dieser Adressenzellen wiederum enthält eine Byte-Adresse, den Speicherschlüssel und den Stationsmodus. Der Datenpuffer des Pufferspeichers enthält 16 Datenbytes und das Arbeitsspeicher-Fehlerwort. Die Anfangsadresse des Datenpuffers innerhalb des Pufferspeichers ZUWP wird aus der Stationsnummer errechnet. Die Byteadresse im Datenpuffer stimmt mit den letzten vier Bits der Byteadresse im Arbeitsspeicher überein. Der Stationsmodus enthält den Arbeitsmodus und den Status der Station. Das sind Briefkasten oder Verkehr mit dem Hauptspeicher
rechts- oder linksbündig ausrichten
Byteadresse ist Anfangs- oder Endadresse
Schreiben oder Lesen
vier oder neun Bytes "look-ahead" Lesen
Stationsstatus, Fehlermeldungen
Arbeitsspeicher-Befehlsbits
erweiterter Speicherschutz.

Zum Zubringerwerk ZUW gehören ferner ein Realadressenrechner READR. Dieser kann Byteadressen um 1,2,3,4,8 oder 12 erhöhen oder erniedrigen. Ferner ist ein Byte-Kreisshifter BKS zum Ausrichten der Bytes vorgesehen, sowie ein Puffer-Adreß-Rechner PADRRE, der die Adressen für die Adreßzellen und die Datenpuffer der Stationen im Pufferspeicher ZUWP bildet. In einem Zwischenpuffer FIFO werden ferner Aufträge für den Arbeitsspeicher gepuffert, die nicht unmittelbar im Arbeitsspeicher gesendet werden können. Damit wird eine gleichmäßigere Auslastung des Arbeitsspeichers ASP erreicht.

Mit dem im Zubringerwerk ZUW enthaltenen und für alle Funktionseinheiten der Ein/Ausgabe-Steuerung IOC zentralisierten Hardware-Einrichtungen lassen sich folgende Funktionen ausführen.

Ausgehend von einer einmal eingestellten Byte-Adresse wird diese Adresse entsprechend der Anzahl der von einer Funktionseinheit transportierten Bytes aufwärts oder abwärts gezählt, wobei selbständig erkannt wird, wenn ein Zugriff zum Arbeitsspeicher erforderlich ist. Weiterhin wird beim Schreiben von einer Funktionseinheit in den Arbeitsspeicher erkannt, wann eine Doppelwort-Einheit mit Daten gefüllt ist und abgespeichert werden muß. Hierdurch werden unnötige Speicherzugriffe für jede Bytekette, die kleiner als acht Bytes ist, vermieden. Überdies ist die Speicherzykluszeit kürzer, wenn alle acht Bytes eines Doppelwortes geschrieben werden, da das anderenfalls erforderliche Auslesen des Doppelwortes die Fehlererkennung bzw. Korrektur und das "Mischen" der zu schreibenden Bytes mit den unverändert zurückzuschreibenden Bytes entfällt.

Beim Lesen durch eine Funktionseinheit wird ein einstellbarer Vorrat von Daten aus dem Arbeitsspeicher in den Pufferspeicher des Zubringerwerks ZUW geladen und kann von dort in Form von Byteketten von der Funktionseinheit abgerufen werden.

Das Zubringerwerk sorgt ferner dafür, daß ein einstellbarer Mindestvorrat von Daten im Pufferspeicher vorhanden ist bzw. aus dem Arbeitsspeicher nachgeladen wird, wenn der Mindestvorrat unterschritten wird; (look-ahead-Verfahren).

Da beim Arbeitsspeicherzugriff nur ein Doppelwort geholt wird, die Funktionseinheiten aber kleinere Byteketten vom Zubringerwerk ZUW abholen, kann auch hier die Zahl der Arbeitsspeicherzugriffe vermindert werden.

Mit Hilfe des Bytekreisshifters wird die von einer Funktionseinheit erwartete Ausrichtung der Byteketten auf die gewünschte Bündigkeit - rechts- oder links-

0056078

bündig - bewirkt, wobei beim Schreiben die von der Funktionseinheit rechts- oder linksbündig angelieferten Byteketten im Pufferspeicher ohne Lücke aneinandergefügt werden, während beim Lesen die Bytekette mit der gewünschten Bündigkeit an die Funktionseinheit übergeben wird. Es ist auch möglich, die nicht zur verlangten Bytekette gehörenden Bytes mit Hilfe einer Maskierungseinrichtung auf einen festen Wert, z.B. auf Null, zu setzen, bevor sie der anfordernden Funktionseinheit übergeben werden.

Der bereits erwähnte Pufferspeicher enthält neben den zu puffernden Daten auch die Arbeitsspeicheradressen und die für die Steuerung der logischen Schaltungen des Zubringerwerks ZUW erforderlichen Steuerbits sowie die vom Arbeitsspeicher gelieferte Fehlerinformation. Die Steuerbits sind teils von Funktionseinheiten geladen, teils von der Ablaufsteuerung des Zubringerwerks selbst erzeugt. Eines der Hauptmerkmale des Zubringerwerks ist die Aufteilung des Pufferspeichers in voneinander unabhängige Bereiche, die im folgenden Stationen genannt werden. Jede Station enthält einen eigenen Bereich für Daten, Adressen sowie Steuer- und Fehlerinformationen. Alle Stationen können - zeitlich nacheinander - die Hardware-Einrichtungen des Zubringerwerks entsprechend der im Pufferspeicher hinterlegten Steuerinformation und entsprechend dem mit jedem Zugriff von den Funktionseinheiten gelieferten Steuer-Bits benutzen. Die Zuordnung der Stationen geschieht vereinbarungsgemäß zu einzelnen Hardware-Funktionseinheiten, wie Zentralprozessor, Ein/Ausgabe-Prozessor, Kanalwerken oder Anschlüssen der Kanalwerke und/oder zu bestimmten Programmen bzw. Prozessen, die auf diesen Funktionseinheiten ablaufen. Eine Station kann auch von mehreren Funktionseinheiten benutzt wer-

0056078

den. Daraus folgt zum Beispiel, daß eine Station von einem "intelligenten" Ein/Ausgabe-Prozessor durch Laden einer Adresse und Steuerinformation eingerichtet werden kann und daß anschließend der eigentliche Datenverkehr in direktem Arbeitsspeicherzugriff von einem einfach aufgebauten Ein/Ausgabe-Kanalwerk über diese Station abgewickelt wird.

Mit dem Zubringerwerk ZUW ist es ferner möglich, die Folge von Arbeitsspeicherzugriffen zu vergleichmäßigen. Zu diesem Zweck ist ein nach dem "first-in-first-out" -Prinzip organisierter Zwischenpuffer FIFO vorgesehen, in welchem solche Aufträge für den Arbeitsspeicher vorgemerkt werden, die wegen aktueller Belegung der Arbeitsspeicher-Schnittstelle nicht sofort ausgeführt werden können. Das Zubringerwerk greift aufgrund solcher vorgemerkter Aufträge selbständig auf den Arbeitsspeicher zu, wenn die Arbeitsspeicher-Schnittstelle wieder frei ist.

Schließlich ist im Zubringerwerk eine Ablaufsteuerung ALS vorgesehen, die so organisiert ist, daß ein vergeblicher Zugriff einer Funktionseinheit wegen aktueller Belegung der Arbeitsspeicher-Schnittstelle in kürzerer Zeit abgehandelt wird als ein erfolgreicher Zugriff. Dies verringert die Belegungszeit des Zubringerwerks sowie des zentralen Bussystems der Datenverarbeitungsanlage durch erfolglose Zugriffe und gibt den anderen Funktionseinheiten eher die Chance eines erfolgreichen Zugriffs zum Zubringerwerk.

Ein Betriebsmodus des Zubringerwerks, Briefkastenmodus genannt, erlaubt den Transport von Daten von und zum Pufferspeicher, wobei die noralerweise feste Zuordnung der Pufferspeicherzellen in den Stationen aufgehoben ist.

0056078

Im Briefkastenmodus werden keine Arbeitsspeicherzugriffe erzeugt. Der Briefkastenmodus kann z.B. dazu benutzt werden, daß Funktionseinheiten Nachrichten füreinander hinterlegen und auslesen, ohne den "Umweg" über den Arbeitsspeicher durchführen zu müssen. Der Briefkastenmodus erlaubt ferner die Benutzung des Pufferspeichers als kleinen Arbeitsspeicher für Testzwecke und wird auch verwendet, um den Pufferspeicher in den Grundzustand zu versetzen.

Das Prinzip des Zubringerwerks erlaubt in einer Variante ferner die Einstellung verschiedener Größen des Datenpuffers, der zu einer Station gehört, z.B. durch die Firmware und ermöglicht damit eine noch bessere Anpassung des Arbeitsspeicherverkehrs an die Anforderungen bestimmter Funktionseinheiten.

Die Verwaltung des Datenpuffers einer Station erfolgt selbständig durch Steuerbits im Pufferspeicher und durch gemeinsam, aber nacheinander von jeder Station benutzte Hardware-Einrichtungen des Zubringerwerks. Die Verwaltung des gesamten Datenpufferraumes im Pufferspeicher, z.B. die Sicherung gegen Überschneidungen der Datenpuffer bei verschiedenen Datenpuffergrössen je Station, erfolgt zweckmäßigerweise durch die Firmware.

In einer weiteren Variante des Zubringerwerks in einem Datenverarbeitungssystem mit virtueller Adressierung wird die Adreßübersetzung von virtuellen in reelle Adressen im Zubringerwerk vorgenommen.

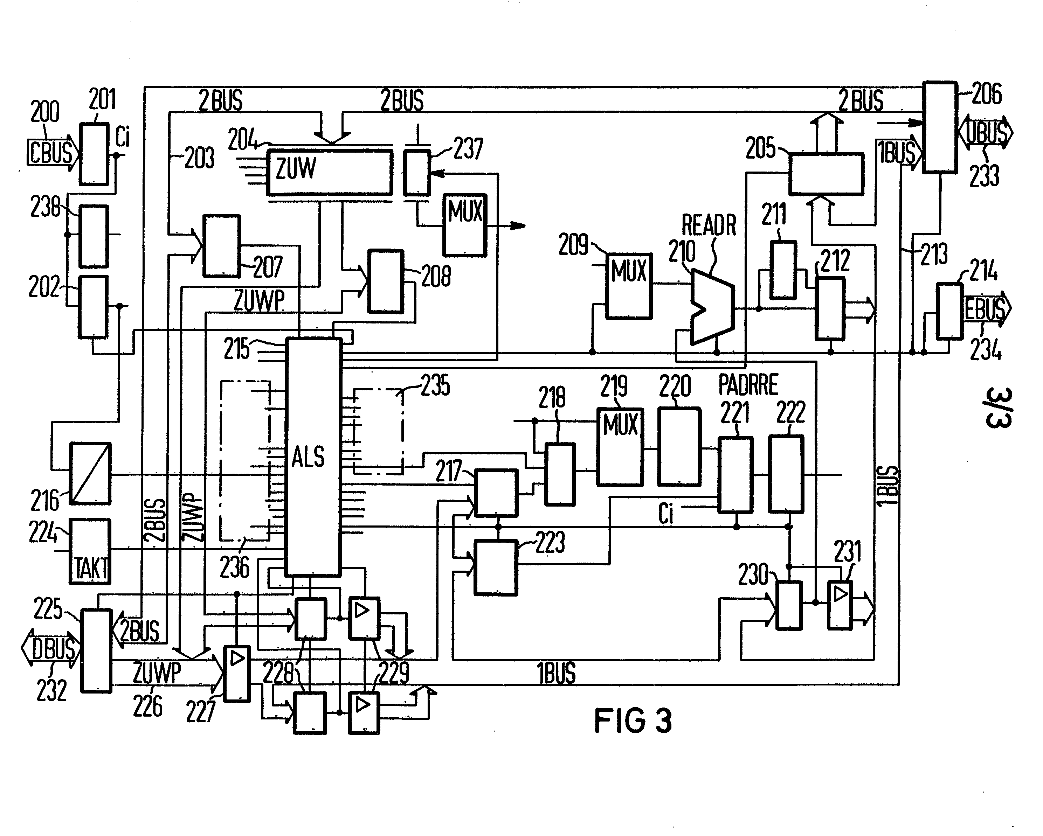

Weitere Einzelheiten der verschiedenen Funktionsgruppen des Zubringerwerks sind in FIG 3 dargestellt und werden im folgenden beschrieben. Der Pufferspeicher ZUWP 204 enthält in seinem linken Teil die aktuelle Adresse und die Daten; in seinem rechten Teil die Statusinformation und das Arbeitsspeicher-Fehlerwort für jede der z.B. 32 Stationen. Nur im Pufferspeicher ZUWP 204 ist jeder Station ein eigener Bereich zugeordnet. Die übrigen Einrichtungen im Zubringerwerk werden für alle Stationen in gleicher Weise genutzt. Die Pufferspeicher-Adressen werden im Pufferadreßregister 222 bereitgestellt. Der linke Teil des Pufferspeichers ZUWP 204 wird byteweise adressiert, wobei die beiden niederwertigsten Bits für jedes der vier Bytes verschieden sein können. Die Pufferadreßmultiplexer PADR-MUX 221 wählen die Pufferadresse aus acht verschiedenen Quellen aus. Beim Lesen und Schreiben von $4/\alpha$ Bytes im Datenpuffer werden die beiden niederwertigsten Pufferadreßbits im Pufferadreßrechner gebildet, dessen Gleichungen in einem programmierbaren Logikbaustein untergebracht sind.

Dem Pufferspeicher ZUWP 204 ist ein Byteselektbit-Speicher 237 zugeordnet, der ein Byteselektbit für jedes gültige Schreibdaten-Byte im Pufferspeicher enthält. Die Byteselektbits werden gesetzt, wenn Datenbytes, die von einer anderen Funktionseinheit übertragen wurden, in den Pufferspeicher geschrieben werden. Nach dem Abspeichern eines Doppelwortes in dem Arbeitsspeicher werden alle Byteselektbits für dieses Doppelwort gelöscht.

Dem Zubringerwerk ZUW ist einerseits das externe Bus-System der Ein/Ausgabesteuerung IOC zugeordnet, andererseits besitzt es ein eigenes internes Bussystem mit den beiden Datenwegen 1-BUS und 2-BUS. Die verschiedenen Busse des externen Bussystems haben für das Zubringerwerk folgende Bedeutung. Der Datenbus D-BUS 232 mit vier Bytes enthält die von anderen Funktionseinheiten angelieferten Datenbytes, Stationsmodi oder Adressen bzw. die vom Zubringerwerk an andere
Funktionseinheiten gesendeten Daten, Stationsmodi, Adressen und Arbeitsspeicher-Fehlerwörter. Der Steuerbus C-BUS
200 mit 12 Bits enthält die Befehle von anderen Funktionseinheiten an das Zubringerwerk. Er wird nur vom
Zubringerwerk empfangen. Der Fehler-Reaktions-Bus
E-BUS 234 mit vier Bits enthält die Antwort des Zubringerwerks an andere Funktionen auf deren auf dem
Steuerbus C-BUS 200 übertragenen Befehl. Der Fehler-
reaktionsbus E-BUS 234 wird nur vom Zubringerwerk ausgesendet. Schließlich enthält das interne Bussystem
noch einen sogenannten U-BUS 233 mit 44 Bits. Er enthält in Richtung Zubringerwerk-Koordinatoradapter die
Arbeitsspeicheradressen, ferner Schlüsselbits und Befehlsbits sowie Schreibdaten und Byteselektbits und
in Richtung Koordinatenadapter-Zubringerwerk Lesedaten,
Fehlerbits und ein Fehlerwort. Die Übertragungsrichtung
wird durch ein Signal 235 gesteuert.

Über das interne Bussystem werden reale Adressen, Daten,
Statusbits und Fehlerwörter übertragen. Es besteht
zum einen aus dem ersten Datenweg 1-BUS 213 mit vier
Bytes. Ihm sind als sendende Register bzw. Verstärker
der 1-BUS-Verstärker 227, das Statusregister 228 mit
Statusverstärker 229, das Realadressen-Register 212
sowie das 1-BUS-Register 230 und auf der Empfängerseite der Bytekreisshifter 205, der U-BUS-Transceiver
206, das Statusregister 228, das 1-BUS-Register 230
mit 1-BUS-Verstärker 231 und das Real-Adreß-Register
223 zugeordnet. Der zweite Datenweg des internen Bussystems ist mit 2-BUS 203 bezeichnet und ist 4 Bytes
breit. Ihm sind als sendende Register bzw. Verstärker
der Byte-Kreisshifter 205 und der U-BUS-Transciever
206 sowie als Empfänger der Pufferspeicher ZUWP 204, der D-BUS-Transciever 225  und die 2-BUS-Paritätsprüfeinrichtung 207  zugeordnet. Die Ausgänge des Pufferspeichers ZUWP 204  und der D-BUS-Transciever 225
sind zu einem weiteren Bussystem 226  zusammengefaßt,
an dem als Empfänger der 1-BUS-Verstärker 227, die
1-BUS-Paritätsprüfeinrichtung 208  und ein Teil des
Statusregisters 228  hängen.

Das Zubringerwerk wird mit C-BUS 00=1  im Befehls-
Decoder 216  adressiert. Wenn die Ablaufsteuerung 215
frei ist, wird der Inhalt des Steuerbusses C-BUS 200
in das Steuerregister 202  übernommen und decodiert.
Die decodierten Befehle = Transportfunktionen  steuern
den weiteren Ablauf. Folgende Transportfunktionen
sind möglich:

      Bringe reale/effektive Adresse nach Station $\beta$
      transportiere Stationsmodus  von bzw. nach Station $\beta$
      transportiere $4/\alpha$ Bytes von bzw. nach Station $\beta$
      hole Adresse von Station $\beta$
      hole übersetzte Adresse von Station $\beta$
      hole Fehlerwert von Station $\beta$
      hole 2 Bytes zählend von Station $\beta$

Das Statusregister 228  wird bei jeder Transportfunktion
und auch bei Lesedaten- und Startfehlereintrag aus dem
Pufferspeicher ZUWP 204  herausgeladen und enthält in
den Bits 00, 01, 02, 06 ... 15  Zustands- und Fehlerbits, die von der Ablaufsteuerung 215  auch einzeln
gesetzt und gelöscht werden können und für die Ablaufsteuerung 215  benötigt werden. Die Bits 24 bis 31
werden ebenfalls aus dem Pufferspeicher ZUWP 204  herausgeladen und enthalten den von einer anderen Funktionseinheit angegebenen Statusmodus. Auch diese Bits werden
für die Ablaufsteuerung 215  benötigt. Am Ende eines
Ablaufs werden die - gegebenenfalls veränderten - Sta-

0056078

tusbits über Bussender 229 und den Byte-Kreisshifter 205 in den Pufferspeicher ZUWP 204 zurückgeschrieben.

Das Zubringerwerk ist in der Lage, eine Gruppe von 1...4 Datenbytes, beginnend mit einer beliebigen Anfangs- oder Endadresse, rechts- oder linksbündig auf den Datenbus D-BUS 232 zu senden oder vom Datenbus D-BUS zu empfangen. Die Ausrichtung der Datenbits für den Datenbus D-BUS 232 oder in umgekehrter Richtung für den Eintrag, erfolgt durch den Byte-Kreisshifter 205. Er stellt die Verbindung zwischen den Datenwegen 1-BUS 213 und 2-BUS 203 her. Beim Lesen/ Schreiben von Datenbytes während der Transportfunktion: Transportiere 4/$\alpha$ Bytes von bzw. nach Station $\beta$ wird der Byte-Kreisshifter 205 über entsprechende Signale auf den verlangten Shift eingestellt. Während der übrigen Zeit stellt der Byte-Kreisshifter 205 eine 1 zu 1-Verbindung zwischen dem Datenweg 1-BUS 213 und dem Datenweg 2-BUS 203 her bzw. sperrt diese Verbindung.

Der Realadressenrechner 210 führt alle Rechnungen mit der realen Adresse aus. Für den Rechenvorgang wird die aktuelle reale Adresse in das 1-BUS-Register 230 geladen, dessen Ausgang auf den Real-Adreß-Rechner 210 geschaltet ist. Der zu addierende bzw. zu subtrahierende Wert wird über einen Multiplexer 209 auf die vier niederwärtigsten Stellen des Realadreß-Rechners 210 geschaltet. Der Ausgang des Realadreß-Rechners 210 wird im Realadreß-Register 212 verriegelt. Auf dem Weg vom Realadreß-Rechner 210 wird die Parität der drei Realadreß-Bytes neu gebildet, und zwar im Paritäts-Generator 211.

Der Zwischenspeicher FIFO 218 hat eine Tiefe von 16 Stellen und eine Breite von 10 Bits. In ihm werden Aufträge für den Arbeitsspeicher eingetragen, die wegen der Belegung der Arbeitsspeicher-Ablaufsteuerung durch bereits laufende Arbeitsspeicher-Zugriffe nicht sofort ausgeführt werden können. Ein am Zwischenspeicherausgang erscheinender Arbeitsspeicherauftrag führt im Ruhetakt und wenn kein anderer Arbeitsspeicherauftrag abgewickelt wird, zu einem Arbeitsspeicher-Start. Danach wird dieser Arbeitsspeicher-Auftrag entladen und der nächste Auftrag (soweit vorhanden) an den Zwischenspeicher-Ausgang geschaltet. Während der Ausführung einer Transportfunktion können maximal zwei Einträge in den Zwischenspeicher FIFO erfolgen. Ein Zähler, der mit Zwischenspeicher-Ladeimpulsen hoch- und mit Entladeimpulsen heruntergezählt wird, erzeugt eine Sperre, wenn weniger als zwei freie Stellen im Zwischenspeicher sind. Das Zubringerwerk nimmt dann keine weiteren Befehle von anderen Funktionseinheiten mehr an, bis wieder mindestens zwei Stellen im Zwischenpuffer FIFO 218 frei sind.

Patentansprüche

1. Datenverarbeitungsanlage mit Zentralprozessor, Arbeitsspeicher und einer Ein/Ausgabe-Steuerung, deren verschiedene Funktionseinheiten, wie Ein/Ausgabe-Prozessor, Ein/Ausgabe-Kanalwerke usw. über ein zentrales Bussystem, bestehend aus Daten-Steuer- und Fehlerreaktionsbus, miteinander verkehren, d a d u r c h g e k e n n z e i c h n e t , daß zur Steuerung des Speicherverkehrs zwischen Arbeitsspeicher (ASP) und der Ein/Ausgabesteuerung (IOC) ein allen Funktionseinheiten der Ein/Ausgabe-Steuerung gemeinsames Zubringerwerk (ZUW) eingeschaltet ist, das einen im Vergleich zum Arbeitsspeicher schnellen Pufferspeicher (ZUWP) zur Speicherung der Daten und der Arbeitsspeicheradressen und einen Adreßrechner zur Umsetzung der in einer Doppelwortstruktur einschließlich Doppelwort-Adresse vom Arbeitsspeicher bereitgestellten Daten in eine Bytestruktur mit Byteadresse aufweist, daß der Pufferspeicher in einzelne, jeweils einer Funktionseinheit zugeordnete Stationen eingeteilt ist und daß dem Pufferspeicher ein Byte-Kreisshifter zur links- bzw. rechtsbündigen Ausrichtung der Byteketten zugeordnet ist.

2. Datenverarbeitungsanlage nach Anspruch 1, d a - d u r c h g e k e n n z e i c h n e t , daß dem Pufferspeicher ein nach dem "first-in-first-out-Prinzip" organisierter Zwischenspeicher vorgeschaltet ist, in welchem Aufträge für den Arbeitsspeicher bei belegter Arbeitsspeicher-Stützstelle zwischenspeicherbar und aus dem die Daten bei freiwerdender Schnittstelle nacheinander abrufbar sind.

FIG 1

1/3

0056078

FIG 2

0056078

2/3

0056078

FIG 3